(19) Europäisches Patentamt
European Patent Office
Office européen des brevets

(11) **EP 3 441 716 B1**

(12) **EUROPEAN PATENT SPECIFICATION**

(45) Date of publication and mention
of the grant of the patent:
**04.03.2020 Bulletin 2020/10**

(51) Int Cl.:
***G01B 7/28*** *(2006.01)*      ***G01B 5/00*** *(2006.01)*

(21) Application number: **17779041.7**

(22) Date of filing: **30.03.2017**

(86) International application number:
**PCT/JP2017/013315**

(87) International publication number:
**WO 2017/175662 (12.10.2017 Gazette 2017/41)**

(54) **WORKPIECE SUPPORTING DEVICE**

STÜTZVORRICHTUNG FÜR WERKSTÜCKE

DISPOSITIF DE SUPPORT DE PIÈCE À EXAMINER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.04.2016 JP 2016076292**

(43) Date of publication of application:
**13.02.2019 Bulletin 2019/07**

(73) Proprietor: **Tokyo Seimitsu Co., Ltd.
Tokyo 192-8515 (JP)**

(72) Inventor: **TAKANASHI, Ryo
Tsuchiura-city
Ibaraki 300-0006 (JP)**

(74) Representative: **Grünecker Patent- und
Rechtsanwälte
PartG mbB
Leopoldstraße 4
80802 München (DE)**

(56) References cited:
**JP-A- 2003 247 017     JP-A- 2005 091 051
JP-A- 2014 181 986     JP-A- 2014 181 986**

## Description

{Technical Field}

The present invention relates to a workpiece supporting device for supporting a workpiece in a shape measuring device (shape meter).

{Background Art}

Conventionally, as a shape measuring device for measuring a shape of a workpiece (object to be measured), there is known a roundness measuring device for measuring the roundness of a workpiece having a columnar shape or cylindrical shape. In the roundness measuring device, in a state where a probe of a detector is brought into contact with a periphery of the workpiece supported on a table, the detector is rotated relatively around the workpiece and measures the roundness of the workpiece.

Usually, such a roundness measuring device supports a bottom surface (plane) of the workpiece at three points on the table (see, e.g., PTL 1 and PTL 2). Further, in a case where a roundness of a large-sized workpiece is measured, it is known that the roundness is measured in a state where the workpiece is set on the reference plane such as a surface plate (level block). PTL 3 discloses the preamble of claim 1 and PTL 4 discloses further background art.

{Citation List}

{Patent Literature}

PTL 1: Japanese Patent Application Laid-Open No. 06-341804
PTL 2: Japanese Patent Application Laid-Open No. 2000-146504
PTL 3: JP 2014 181986 A
PTL 4: JP 2005 091051 A

{Summary of Invention}

{Technical Problem}

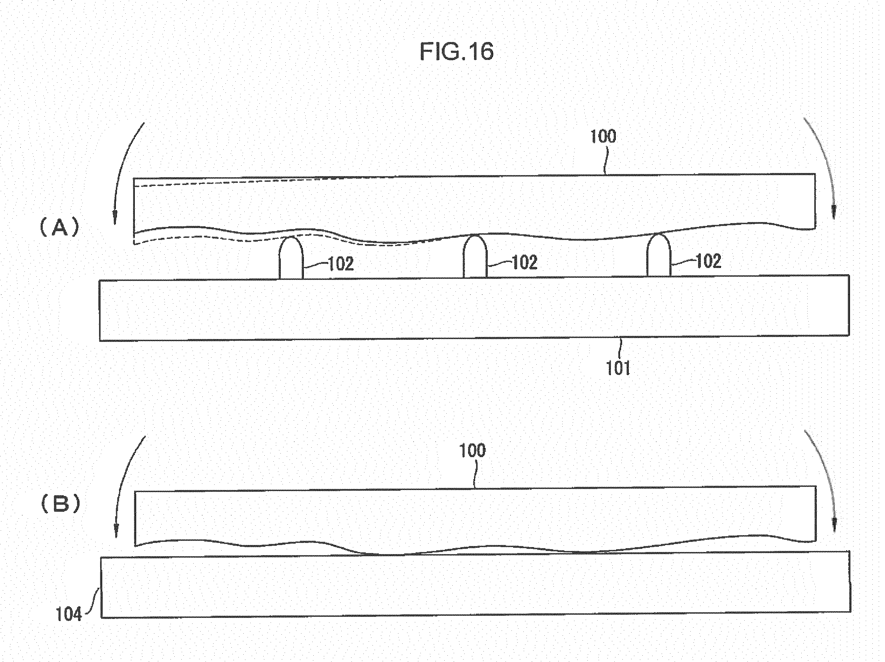

(A) and (B) portions of Figure 16 are explanation views for explaining a problem of the conventional technique. Note that, in (A) and (B) portions of Figure 16, the unevenness of the bottom surface of the workpiece 100 is emphasized more than actual size. As shown in (A) portion of Figure 16, in the case where the workpiece 100 is supported at three points by the three support projections 102 (supporting points) provided on the table 101 of the roundness measuring device, if the workpiece 100 is large, the distance among the support projections 102 is widened, and therefore, the deflection of the workpiece 100 is generated by its own weight (denoted by dotted line in the figure). As a result, the roundness measuring accuracy is degraded.

Further, as shown in (B) portion of Figure 16, in order to suppress the generation of deflection due to own weight of the workpiece 100, if the workpiece 100 is set on the reference plane 104 such as a surface plate, the flatness of the reference plane 104 affects precision in roundness measurement. Furthermore, theoretically, the workpiece 100 should make a point contact somewhere with the reference plane 104, but it is not possible to determine where the contact point is. This remains as errors in roundness measurement. Further, the reference plane 104 on which a large-sized workpiece 100 can be set becomes large and heavy, and at the same time, it becomes extremely difficult to secure the flatness accuracy of the reference plane 104, thereby increasing costs.

The present invention has been implemented in light of such circumstances, and aims to provide a workpiece supporting device which is able to reduce the deflection of the workpiece at a low cost.

{Solution to Problem}

To achieve the above objective of the present invention, a workpiece supporting device to be provided for a shape measuring device which measures a shape of a workpiece, the workpiece supporting device including: a horizontal table; three first fulcrums provided on an upper surface of the table; first arms swingably supported by the respective first fulcrums, each of the first arms swingably supported at a central part in a longitudinal direction of the first arm by the first fulcrum; and a plurality of first contacting parts swingably provided on an upper surface of the first arm for each first fulcrum and distributed from the first fulcrum in different directions, the first contacting parts configured to come into contact with the workpiece, wherein the first arm is retractable in the longitudinal direction of the first arm.

According to the workpiece supporting device, it is possible to shorten the distance between the first contacting parts (workpiece fulcrums) which support the workpiece and is possible to bring the first contacting parts into contact with the bottom surface of the workpiece in a state where the first contacting parts securely follow the bottom surface of the workpiece.

In the workpiece supporting device according to another aspect of the present invention, positional relation between the first fulcrums satisfies a requirement that a first line segment connects two of the three first fulcrums, a second line segment is connectable between the other one first fulcrum and a center of gravity of the workpiece, and an extension of the second line segment perpendicularly intersects with the first line segment at a midpoint of the first line segment. This makes it possible to stably support the workpiece.

In the workpiece supporting device according to another aspect of the present invention, the first fulcrums are provided on the upper surface of the table around a gravity center axis, which passes through a center of gravity of the workpiece and extends perpendicularly to the upper surface of the table, at equal spacing. This makes it possible to uniformly support the workpiece by the first contacting parts.

In the workpiece supporting device according to another aspect of the present invention, the first fulcrums are provided on the upper surface of the table on the same circle having a center of gravity of the workpiece as a circle center. This makes it possible to uniformly support the workpiece by the first contacting parts.

The workpiece supporting device according to another aspect of the present invention further comprises a guide part configured to movably support the first fulcrums along the upper surface of the table. This makes it possible to support the workpiece having any dimension (size) and shape without exchanging the workpiece supporting device.

In the workpiece supporting device according to another aspect of the present invention, the first fulcrum supports the first arm swingably around an axis which is parallel to a third line segment that connects the first fulcrum and a center of gravity of the workpiece. This makes it possible to bring the first contacting parts into contact with the bottom surface of the workpiece in a state where the first contacting parts securely follow the bottom surface of the workpiece.

In the workpiece supporting device according to another aspect of the present invention, all of the first contacting parts are arranged on the same circle having a center of gravity of the workpiece as a circle center. This makes it possible to uniformly support the workpiece by the first contacting parts.

In the workpiece supporting device according to another aspect of the present invention, all of the first contacting parts are distributed on a plurality of circles having diameters different from each other. This makes it possible to support a large workpiece.

In the workpiece supporting device according to another aspect of the present invention, all of the first contacting parts are arranged around a gravity center axis, which passes through a center of gravity of the workpiece and extends perpendicularly to the upper surface of the table, at equal spacing. This makes it possible to uniformly support the workpiece by the first contacting parts.

In the workpiece supporting device according to the present invention, the first arm is retractable in the longitudinal direction of the first arm. This makes it possible to support the workpiece having any dimension (size) and shape without exchanging the workpiece supporting device.

In the workpiece supporting device according to another aspect of the present invention, the first contacting part includes: second fulcrums provided on the upper surface of the first arm; second arms swingably supported by the second fulcrums, each of the second arms swingably supported at a central part in a longitudinal direction of the second arm by the second fulcrum; and a plurality of second contacting parts swingably provided on an upper surface of the second arm for each second fulcrum and distributed from the second fulcrum in different directions, the second contacting parts configured to come into contact with the workpiece. It is possible to make the distance between the second contacting parts shorter than the distance between the first contacting parts and therefore it is possible to reduce the deflection of the workpiece caused due to own weight of the workpiece.

{Advantageous Effects of Invention}

The workpiece supporting device of the present invention is able to reduce the deflection of the workpiece at a low cost.

{Brief Description of Drawings}

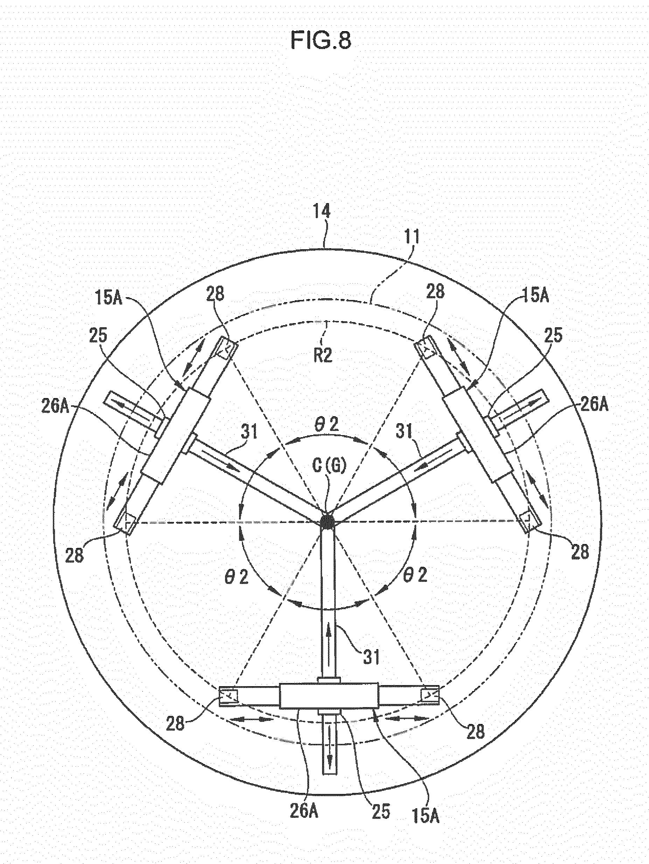

Although different examples are identified as embodiments throughout the description, only embodiment 2 is an embodiment falling under the scope of the claims. This embodiment is shown in figures 8, 9 and 11. All other figures, as well as so called embodiments 1 and 3-5 show examples useful for understanding the invention.

Figure 1 is a side view illustrating an example of a roundness measuring device.

Figure 2 is a top view of a table.

Figure 3 is an explanation view for explaining an arrangement of three workpiece support units on the table.

Figure 4 is an enlarged side view of one of the workpiece support units.

Figure 5 is an explanation view explaining positional relation of each arm fulcrum in Figure 3 in a different form of expression.

Figure 6 is an explanation view for explaining an arrangement of each workpiece seat.

Figure 7 shows explanation views for explaining an effect of the workpiece support units of the present embodiment, in (A) and (B) portions.

Figure 8 is an explanation view for explaining the table and the workpiece support unit provided in a roundness measuring device according to a second embodiment.

Figure 9 is an explanation view for explaining positional adjustment of respective workpiece seats.

Figure 10 shows, in (A) and (B) portions, a top view and a side view of a workpiece in which a position of the center of shape is different from a position of the center of gravity in a part to be measured in the roundness measurement.

Figure 11 is an explanation view for explaining the workpiece supported by workpiece support units according to the second embodiment.

Figure 12 is an explanation view for explaining workpiece support units provided in a roundness measuring device according to a third embodiment.

Figure 13 is an explanation view for explaining workpiece support units provided in a roundness measuring device according to a fourth embodiment.

Figure 14 is an explanation view for explaining workpiece support units provided in a roundness measuring device according to a fifth embodiment.

Figure 15 is an explanation view for explaining another embodiment of the arrangement of the arm fulcrums and the workpiece seats.

Figure 16 shows explanation views for explaining a problem of the conventional technique, in (A) and (B) portions.

{Description of Embodiments}

configuration of Roundness Measuring Device of First Embodiment>

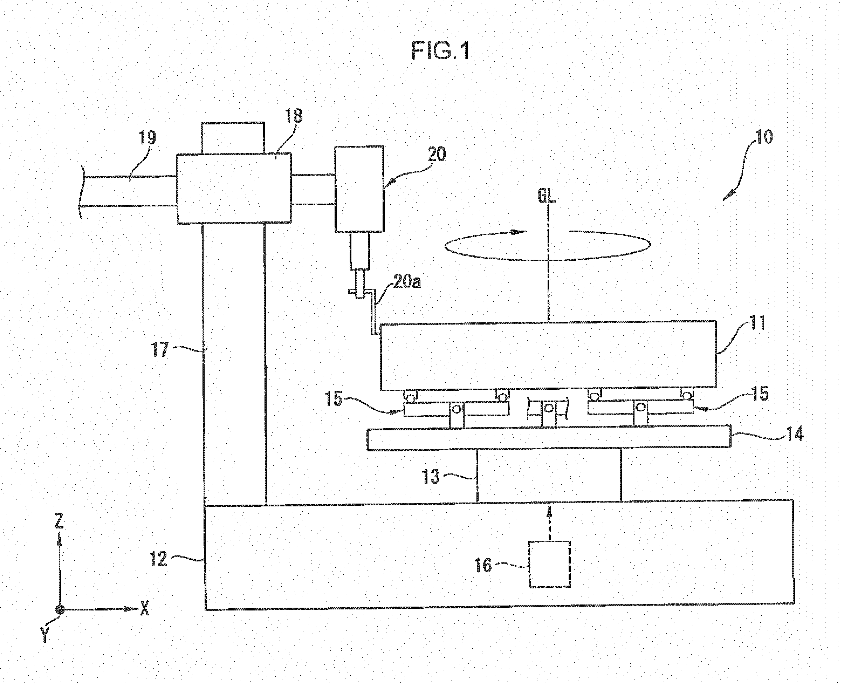

Figure 1 is a side view illustrating an example of a roundness measuring device 10. As shown in Figure 1, the roundness measuring device 10 corresponds to a shape measuring device and measures a roundness of a columnar (disc-shaped) workpiece 11.

The roundness measuring device 10 is provided with a base 12 (pedestal), a table support unit 13, a table 14 (also referred to as a stage), (a) workpiece support unit(s) 15, a rotary driving unit 16, a column 17 (also referred to as a strut), a carriage 18 (also referred to as a slider), a horizontal arm 19, and a detector 20. Note that, the roundness measuring device 10 is not limited to the type shown in Figure 1 and may be various types of known devices.

The base 12 is a support stand which supports each unit or section of the roundness measuring device 10. The table support unit 13 and the column 17 are provided on an upper surface of the base 12. Further, the rotary driving unit 16 is provided inside the base 12.

The table 14 which has a disc shape is attached on an upper surface of the table support unit 13. The table 14 is supported by the table support unit 13 so as to be rotatable around an axis in the Z-axis direction (up and down direction). The table 14 is attached on the upper surface of the table support unit 13 in a state where inclination of the table 14 is adjusted so as to be horizontal (parallel to the X and Y directions).

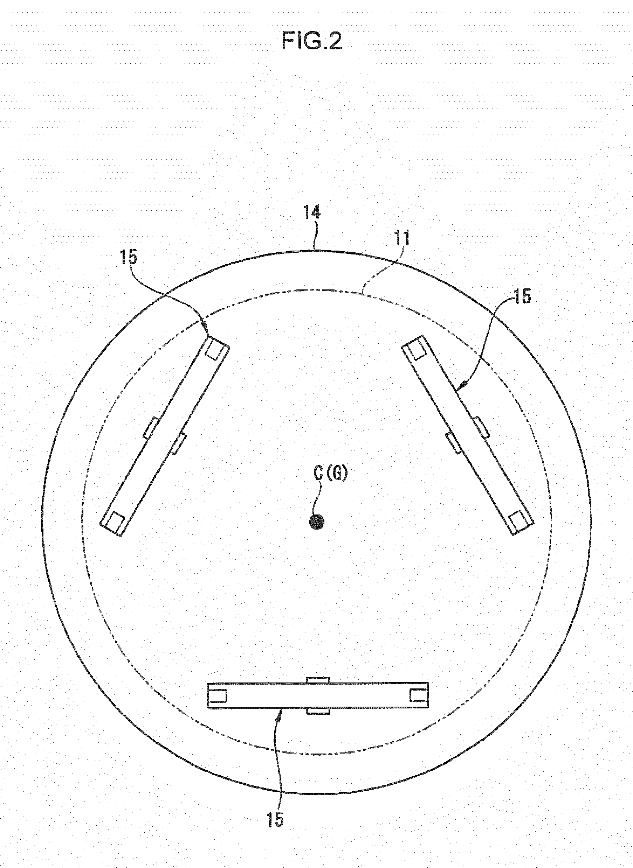

Figure 2 is a top view of the table 14. As shown in Figure 2, three workpiece support units 15 which support the workpiece 11 are provided on an upper surface of the table 14. In other words, the table 14 supports the workpiece 11 through each of the workpiece support units 15. The table 14 and each of the workpiece support units 15 constitute the workpiece supporting device.

The workpiece 11 whose roundness is to be measured is supported by each of the workpiece support units 15 so that a center of shape of the workpiece 11 (the center of a shape of a part to be measured) coincides with a table center C which is the center of rotation of the table 14. Note that, since the workpiece 11 of the present embodiment is columnar (disc-shaped), the position of the center of shape and the position of the center of gravity G of the workpiece 11 coincide with each other.

Returning to Figure 1, the rotary driving unit 16 has: a motor; and a drive transmission mechanism which transmits rotation of the motor to the table 14 to rotate the table 14 which is supported on the table support unit 13, around an axis in the Z-axis direction. Accordingly, the workpiece 11 also rotates integrally with the table 14 through each of the workpiece support units 15. As a result, the workpiece 11 rotates around a rotating axis of the table 14 or around the gravity center axis GL, which extends through the center of gravity G of the workpiece 11 in a direction perpendicular to the upper surface of the table 14, as a center of rotation (including an approximate center of rotation).

The column 17 is provided on an upper surface of the base 12 and on a side end side in the X-axis direction with respect to the table 14. The column 17 has a shape elongated in the Z-axis direction. The carriage 18 is attached to the column 17 so as to be movable in the Z-axis direction.

The horizontal arm 19 is attached to the carriage 18 so as to be movable in the X-axis direction (horizontal direction). The detector 20 is attached to the tip end of the horizontal arm 19.

The detector 20 has a probe 20a and a displacement detection unit such as an unillustrated differential transformer, etc. The detector 20 outputs a detection signal (electrical signal) indicating the displacement of the probe 20a.

When the roundness measuring of the workpiece 11 is carried out, the carriage 18 and the horizontal arm 19 are driven such that the probe 20a is brought into contact with a measuring position (outer peripheral surface in the present embodiment) of the workpiece 11. Next, while the workpiece 11 is being rotated by the rotary driving unit 16 via the table 14, etc., a detection signal is obtained from the detector 20. The detection signal thus from the detector 20 is inputted to an unillustrated calculation processing unit. Then, the calculation processing unit carries out the various processing (analyzing) of the detection signal inputted from the detector 20, and then generates measurement data indicating the roundness of the workpiece 11.

<Workpiece Support Unit of First Embodiment>

The workpiece support unit according to the first embodiment does not form part of the invention but represents a further example that is useful for understanding the invention.

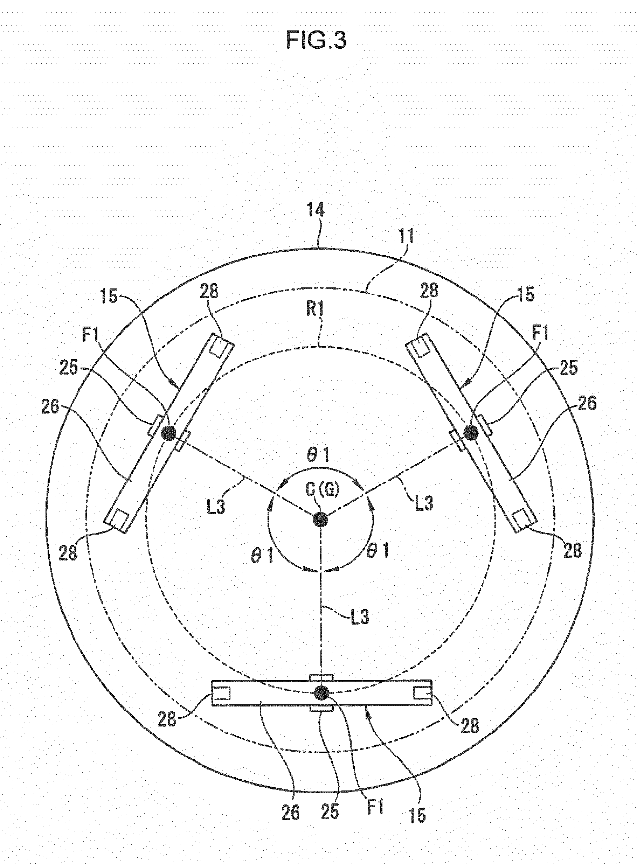

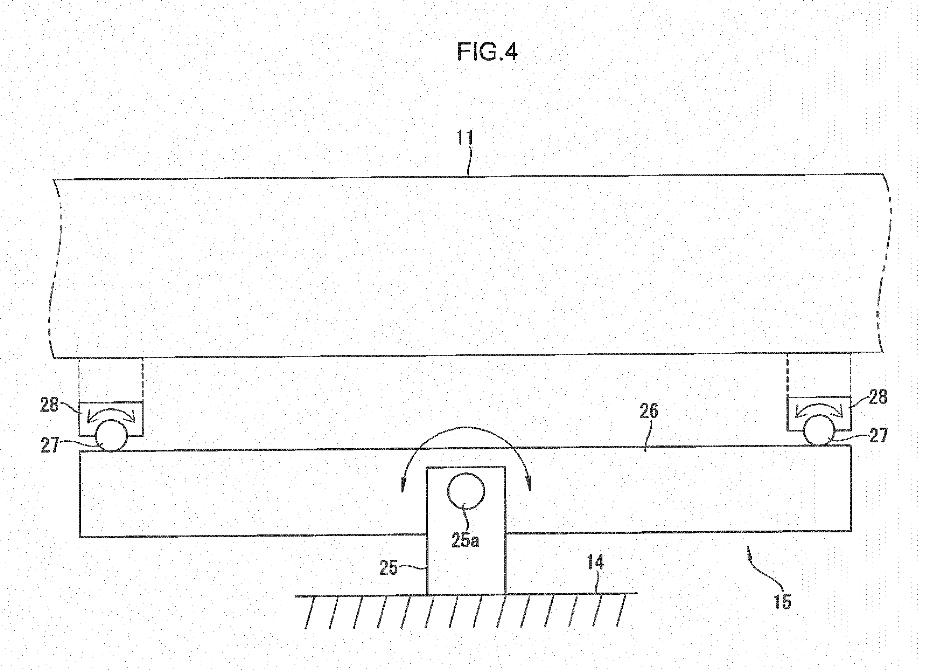

Figure 3 is an explanation view for explaining an arrangement of three workpiece support units 15 on the table 14. Further, Figure 4 is an enlarged side view of one of the workpiece support units 15.

As shown in Figures 3 and 4, each of the workpiece support units 15 provided on the upper surface of the table 14 includes an arm fulcrum 25, an arm 26, two ball fulcrums 27 (ball-shaped fulcrums), and two workpiece seats 28. Note that, in the Figure, reference character "F1" is a fulcrum position denoting a position (e.g., center position) of each of the arm fulcrums 25.

The arm fulcrums 25 of the workpiece support units 15 each correspond to the first fulcrum. The arm fulcrums 25 are provided on the upper surface of the table 14 at positions on the same circumference R1 having the center of gravity G of the workpiece 11 as a center, and are arranged around the gravity center axis GL passing through the center of gravity G at equal spacing $\theta 1$ ($\theta 1$ = 120 degrees). Note that, the diameter size of the same circle R1 of the positions is changed depending on the dimension (diameter) of the workpiece 11.

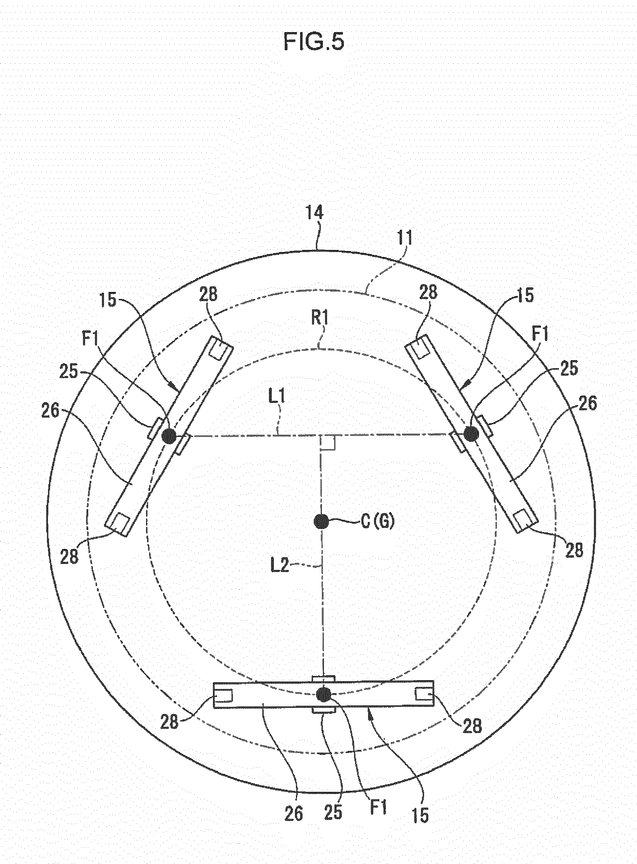

As shown in Figure 5, the positional relation among arm fulcrums 25 satisfies the requirement that a first line segment L1 connects optional two of the three arm fulcrums 25, a second line segment L2 connects the other first fulcrum and the center of gravity G of the workpiece 11, and the extension of the second line segment L2 perpendicularly intersects with the first line segment L1 at the midpoint of the first line segment L1. Note that, Figure 5 is an explanation view explaining the positional relation among arm fulcrums 25 in Figure 3, in a different form of expression.

Returning to Figures 3 and 4, each arm fulcrum 25 swingably supports the arm 26, which corresponds to the first arm, at a central part in the longitudinal direction of the arm 26 such that the arm 26 is swingable around a horizontal axis. Specifically, each arm fulcrum 25 supports the central part of the arm in the arm's longitudinal direction such that the arm 26 is swingable about a swinging axis (rocking axis) 25a which is parallel to a third line segment L3 that connects each arm fulcrum 25 and the center of gravity G.

Two ball fulcrums 27 are provided on both end portions in the arm's longitudinal direction on the upper surface of each of the three arms 26 such that the two ball fulcrums 27 are equally distributed in left and right positions across the arm fulcrum 25 (centering on the arm fulcrum 25). Each ball fulcrum 27 has a spherical shape and supports the workpiece seat 28 swingably in any direction. This makes it possible for the workpiece seats 28 to be inclined in any direction with respect to each ball fulcrum 27 (the upper surface of the arm 26).

The workpiece seats 28 correspond to the first contacting parts and come into contact with a bottom surface of the workpiece 11. Note that, each of the workpiece seat 28 is sufficiently smaller than the bottom surface of the workpiece 11 and therefore comes into contact with the bottom surface of the workpiece 11 in a point contact manner. In the present embodiment, the three arms 26 are each provided with two workpiece seats 28 and therefore the total six workpiece seats 28 come into contact with the bottom surface of the workpiece 11. Because the workpiece seats 28 are respectively swingably mounted on the ball fulcrum 27, the workpiece seats 28 respectively come into contact with the bottom surface of the workpiece 11 such that they are each inclined relative to the arms 26 along the bottom surface of the workpiece 11.

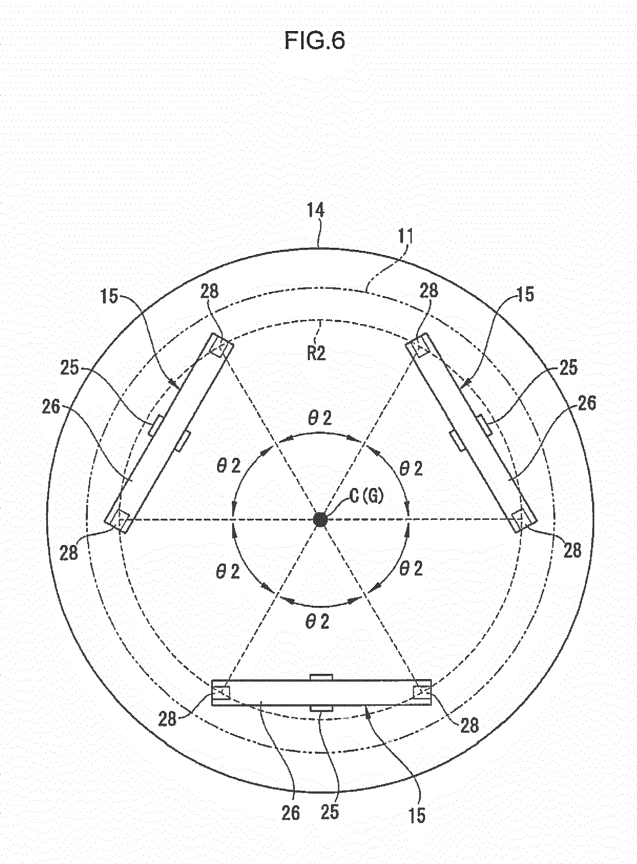

Figure 6 is an explanation view for explaining an arrangement of workpiece seats 28. As shown in Figure 6, in the present embodiment, the positions of the arm fulcrums 25, the lengths of the arms 26, and the positions of the workpiece seats 28 on the arms 26 are each adjusted such that the workpiece seats 28 are disposed at positions on the same circumference R2 having the center of gravity G of the workpiece 11 as a center and are arranged around the gravity center axis GL at equal spacing θ2 (θ2 = 60 degrees). Note that, as with the positions on the same circle R1, the diameter size of the same circle R2 of the positions is also changed depending on the dimension (diameter) of the workpiece 11.

In this way, in the present embodiment, the six workpiece seats 28 are arranged at positions on the same circle R2 at equal spacing θ2, and thus it is possible to support the workpiece 11 at six points uniformly (including almost uniformly). Thereby, the weight of the workpiece 11 can be uniformly distributed to the six points.

<Effect of Present Embodiment

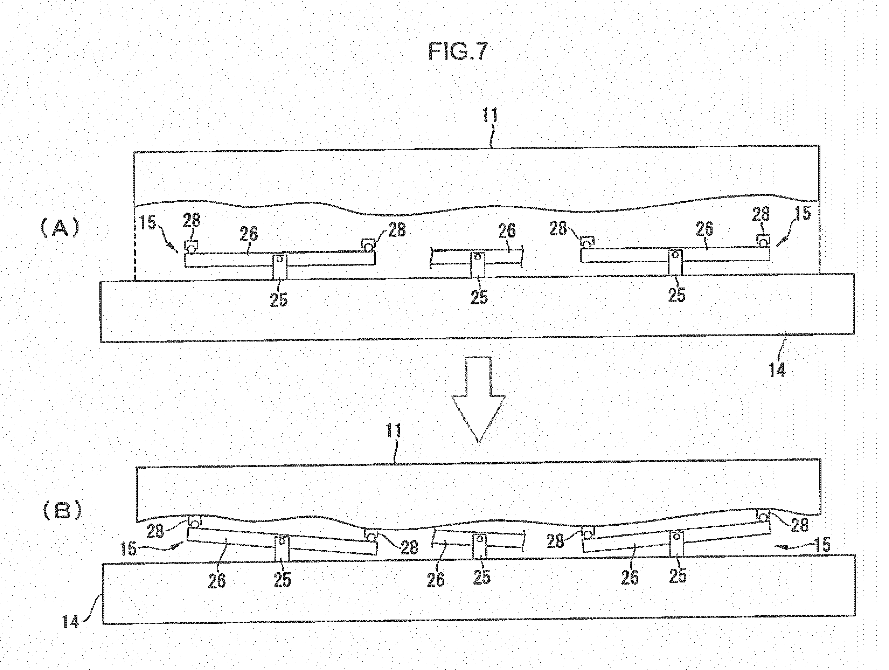

(A) and (B) portions in Figure 7 are an explanation views for explaining an effect of the workpiece support units 15 of the present embodiment. As shown in (A) portion and (B) portion in Figure 7, in the present embodiment, the arms 26 are respectively swingably supported by the arm fulcrums 25, and respectively include the swingable workpiece seats 28. Thus, in a case where the workpiece 11 is set on the workpiece support units 15, the arms 26 can be inclined to either left or right and the workpiece seats 28 can be inclined in an arbitrary direction with respect to the upper surface of the arms 26, depending on an unevenness (convexo-concave) of the bottom surface of the workpiece 11. Therefore, the workpiece seats 28 can be brought into contact with the bottom surface of the workpiece 11 in a state where the workpiece seats 28 surely follow the unevenness of the bottom surface of the workpiece 11. As a result, with the use of all of the six workpiece seats 28 arranged at positions on the same circle R2 at equal spacing θ2, it is possible to uniformly support the workpiece 11 at six points.

In this way, in the case where the workpiece 11 is uniformly supported by the six workpiece seats 28, as compared to the case of the three-point support like the above-mentioned comparative example shown in (A) portion in Figure 16, the distance between the workpiece supporting points (workpiece seats 28) can be shortened. Therefore, it is possible to minimize the generation of deflection of the workpiece 11 due to its own weight.

Specifically, the maximum deflection amount V of the workpiece 11 may be represented by Equation (1):

$$V = (W \times L^4) / (384 \times E \times I) \ldots (1)$$

where W is the own weight of the workpiece 11,
L is the distance between the workpiece fulcrums,
E is a Young's modulus of the workpiece 11, and
I is a section modulus (modulus of section) of the workpiece 11.

Here, in a case where, for example, the distance between the workpiece fulcrums is shortened by half (L' = 2L), even if the own weight of the workpiece 11 is doubled (W' = 2W) due to the upsizing of the workpiece 11, the maximum deflection amount V' of the workpiece 11 may be represented by Equation (2):

$$V' = (W' \times L'^4) / (384 \times E \times I) = V / 32 \ldots (2)$$

As shown in the above Equation (2), by shortening the distance between the workpiece fulcrums (workpiece seats 28), it is possible to support even a large workpiece 11 in a state where the deflection of the workpiece 11 due to its own weight is reduced. Further, because the workpiece support units 15 do not require a high precision machining, it is possible to manufacture them at lower cost. Furthermore, the workpiece support units 15 are tools (jigs) only used at positions where the workpiece 11 is to be supported, and therefore it is possible to manufacture the workpiece support units 15 with a smaller size and lighter weight at lower cost. Thus, as compared to the case where the large reference plane 104 is formed as shown in the above-mentioned (B) portion in Figure 16, it is possible to manufacture the roundness measuring device 10 at lower cost. As a result, with the workpiece support units 15, it is possible to reduce the deflection of the workpiece 11 at lower cost.

Further, differently from the case in which the workpiece 11 is set on the large reference plane 104 as shown in the above-mentioned (B) portion in Figure 16, it is possible to specify the positions of workpiece supporting points which support the workpiece 11. Thus, even if a very small deflection is generated in the workpiece 11, it is possible to correct roundness measuring data by the use of the theoretical deformation calculation of the workpiece 11. Thus, it is possible to reduce error in roundness measurement.

<Second Embodiment>

Figure 8 is an explanation view for explaining the table 14 and the workpiece support unit 15A provided in the roundness measuring device 10 according to a second embodiment. The workpiece support units 15 of the above-mentioned first embodiment are specialized in supporting the workpiece 11 having specific dimensions (diameters) and shapes, and thus, it is necessary to exchange the workpiece support units 15 depending on the change of dimension and shape of the workpiece 11. Contrariwise, with the workpiece support units 15A according to the second embodiment, it is possible to support the workpiece 11 having any dimension and shape.

Note that, the roundness measuring device 10 according to the second embodiment is fundamentally the same as that of the above-mentioned first embodiment with the exception that the workpiece support units 15A are provided instead of the workpiece support units 15. As such, parts or portions which are functionally or structurally the same as those of the above-mentioned first embodiment are denoted using the same reference numerals, and descriptions thereof are omitted.

As shown in Figure 8, on the upper surface of the table 14 according to the second embodiment, three guide grooves 31 (corresponding to the guide part of the present invention) are formed so as to extend from the table center C in a radial direction (radially) on the upper surface of the table 14. The guide grooves 31 are formed on the upper surface of the table 14 and arranged around an axis which passes through the table center C and is perpendicular to the upper surface of the table 14, at equal spacing (θ1 = 120 degrees). In addition, the arm fulcrums 25 of the workpiece support units 15A are each supported by the guide grooves 31 so as to be slidable. Thereby, the positions of the workpiece support units 15A can be individually adjusted along the guide grooves 31.

The workpiece support units 15A are fundamentally the same as the workpiece support units 15 of the above-mentioned first embodiment, with the exception that the arm fulcrums 25 are provided and supported slidably along the guide grooves 31 and that the retractable (expandable) arms 26A are provided in the arm's longitudinal direction different from the arms 26 of the first embodiment.

<Effect of Second Embodiment

In this way, in the second embodiment, the positions of the workpiece support units 15A are respectively adjustable along its guide groove 31 and each arm 26A is retractable in the arm's longitudinal direction and therefore it is possible for the position of each workpiece seat 28 to be individually adjusted depending on the dimension (diameter) and shape of the workpiece 11.

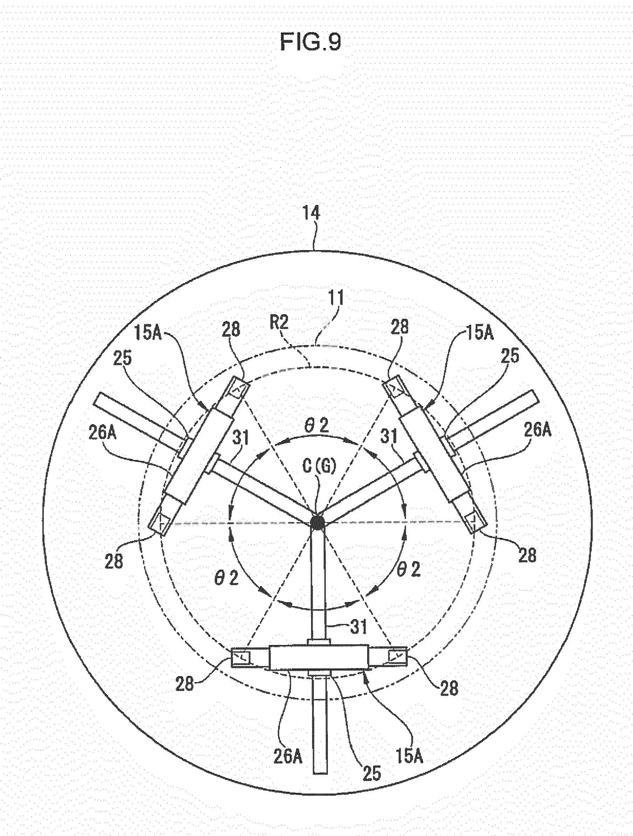

Figure 9 is an explanation view for explaining positional adjustment of each of workpiece seats 28. As shown in Figure 9, in the case where the roundness measuring of a new workpiece 11 having a different diameter is carried out, the positions of the arm fulcrums 25 and the lengths of the arms 26A are each adjusted such that the workpiece seats 28 are arranged at positions on the same circumference R2, which corresponds to the diameter of the new workpiece 11, at equal spacing θ2 (60 degrees). This makes it possible for even a new workpiece 11 having a different diameter to be uniformly supported by the six workpiece seats 28 similarly to the above-mentioned embodiments.

(Specific Effect of Roundness Measuring Device)

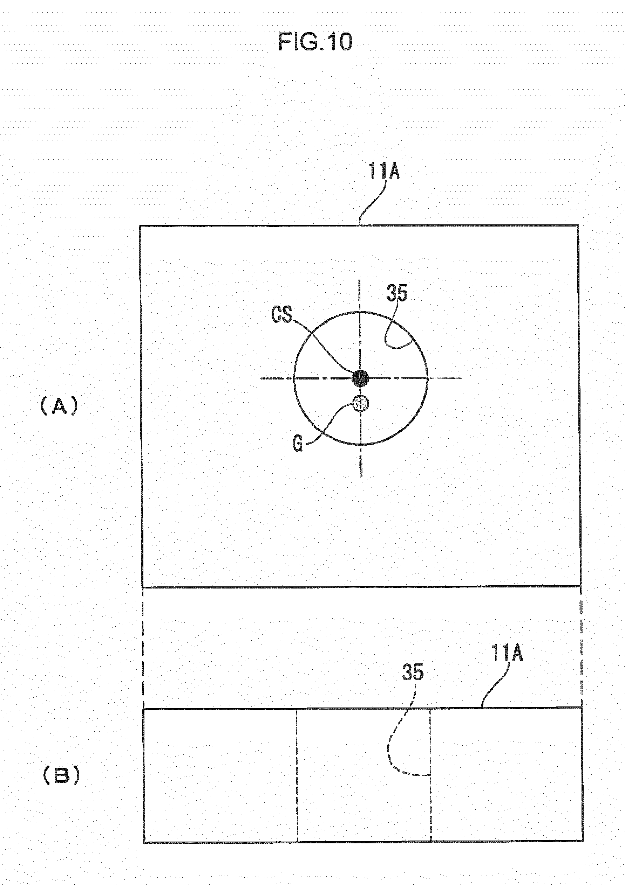

Further, the workpiece support units 15A according to the second embodiment are able to easily handle and support a workpiece 11A (see Figure 10) in which the position of the center of shape of a part to be measured in the roundness measurement is different from the position of the center of gravity G.

(A) and (B) portions in Figure 10 respectively illustrate a top view and a side view of the workpiece 11A in which the position of the center of shape CS of a part to be measured in the roundness measurement is different from the position of the center of gravity G. As shown in (A) and (B) portions of Figure 10, in the case where the roundness measuring of a hole 35 formed in the workpiece 11A having a block shape (rectangular parallelepiped shape) is carried out, in the roundness measuring device 10, it is necessary to support the workpiece 11A on the table 14 such that the position of the center of shape CS of the hole 35 and the position of the table center C of the table 14 coincide with one another.

Then, if the workpiece 11A is supported by the workpiece support units 15A based on the center of shape CS as a reference, the workpiece 11A supported by the workpiece support units 15A becomes unstable because the workpiece 11A is not supported based on the position of the center of gravity G as a reference. As a result, it is likely that the inclination, etc., of the workpiece 11A is caused, thereby negatively affecting measurement data of the roundness measurement.

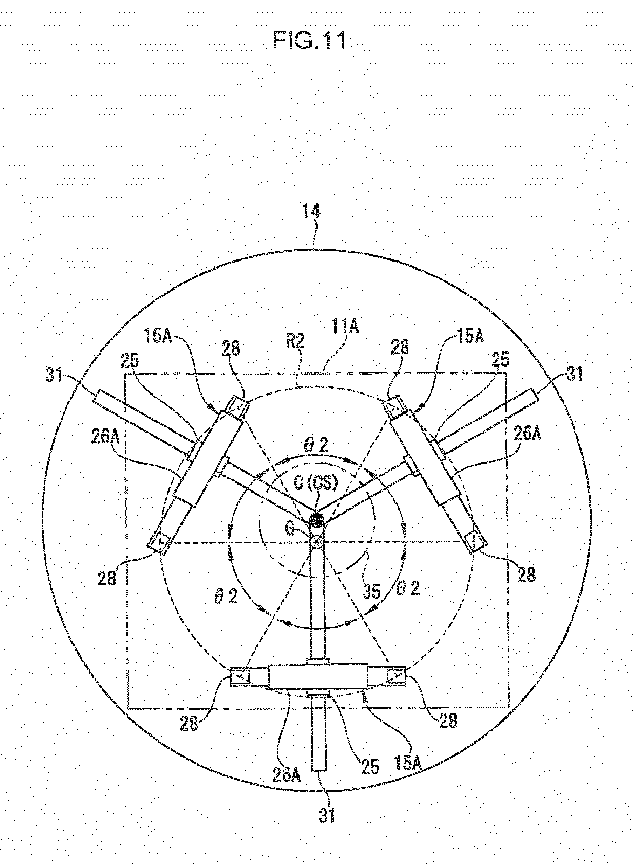

Figure 11 is an explanation view for explaining the workpiece 11A supported by the workpiece support units 15A. As shown in Figure 11, in the case where the roundness measuring of the hole 35 of the workpiece 11A is carried out, in a state in which the center of shape CS of the hole 35 coincides with the table center C, the positions of the arm fulcrums 25 and the lengths of the arms 26A are each adjusted such that the workpiece seats 28 are arranged at positions on the same circumference R2, which is based on the position of the center of gravity G of the workpiece 11A as a reference (the circle center), at equal spacing θ2. This makes it possible to carry out the roundness measuring of the hole 35 in a state where the workpiece 11A is uniformly supported by the six workpiece seats 28.

Note that, in the second embodiment, the guide grooves 31 have a shape radially extending from the table center C. However, the guide grooves 31 are not particularly limited to that shape insofar as the positions of the workpiece support units 15A on the upper surface of the table 14 are changeable (variable). Further, instead of forming the guide grooves 31 in the table 14, various guide parts such as guide rails, etc., may be provided to movably support the arm fulcrums 25 of the workpiece support units 15A.

<Third Embodiment>

The workpiece support unit according to the third embodiment does not form part of the invention but represents a further example that is useful for understanding the invention.

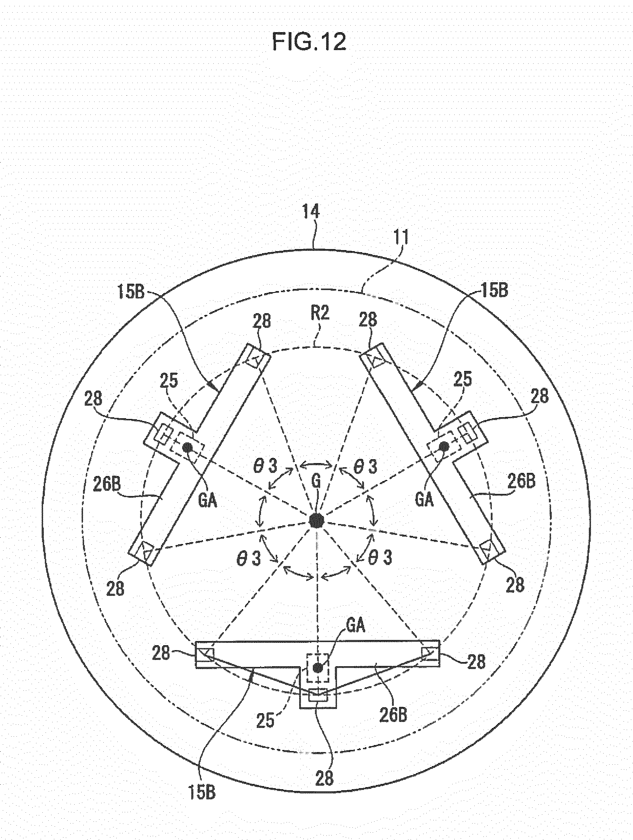

Figure 12 is an explanation view for explaining workpiece support units 15B provided in the roundness measuring device 10 according to the third embodiment. In the above-mentioned embodiments, each workpiece support unit 15, 15A is provided with two workpiece seats 28, whereas in the third embodiment each workpiece support unit 15B is provided with three workpiece seats 28.

Note that, the roundness measuring device 10 according to the third embodiment is fundamentally the same as that of the above-mentioned first embodiment with the exception that the workpiece support units 15B are provided instead of the workpiece support units 15. As such, parts or portions which are functionally or structurally the same as those of the above-mentioned first embodiment are denoted using the same reference numerals, and descriptions thereof are omitted.

As shown in Figure 12, the workpiece support units 15B are each provided with an arm fulcrum 25, an arm 26B different in shape from the arm 26 of the first embodiment, unillustrated three ball fulcrums 27 (see Figure 4), and three workpiece seats 28.

The arm 26B is fundamentally the same as the arm 26 of the above-mentioned first embodiment with the exception that the arm 26B is formed to have a shape in which the three workpiece seats 28 can be arranged.

The three workpiece seats 28 (ball fulcrums 27) are each provided on the upper surfaces of the arms 26B such that the three workpiece seats 28 are arranged on vertexes of an imaginary triangle whose center of gravity GA is located on the arm fulcrums 25, and the three workpiece seats 28 are arranged around the gravity center axis GL (see Figure 1) at equal spacing. That is, the three workpiece seats 28 are arranged and distributed in different directions from of the arm fulcrum 25 as a center (reference) on the upper surface of the arm 26B. More specifically, the total nine workpiece seats 28 provided on the workpiece support units 15B are arranged at positions on the same circumference R2 having the center of gravity G of the workpiece 11 as a circle center and are arranged around the gravity center axis GL at equal spacing θ3 (θ3 = 40 degrees). This makes it possible to uniformly support the workpiece 11 at nine points.

In this way, in the third embodiment, the workpiece 11 is uniformly supported at the nine points and thus it is possible to make the distance between the workpiece fulcrums (workpiece seats 28) shorter than that of the first embodiment. Thus, it is possible to reduce the deflection of the workpiece 11 caused due to its own weight more than the first embodiment.

Note that, in the third embodiment, although the workpiece support units 15B are each provided with the three workpiece seats 28, four or more of the workpiece seats 28 may be provided.

<Fourth Embodiment>

The workpiece support unit according to the fourth embodiment does not form part of the invention but represents a further example that is useful for understanding the invention.

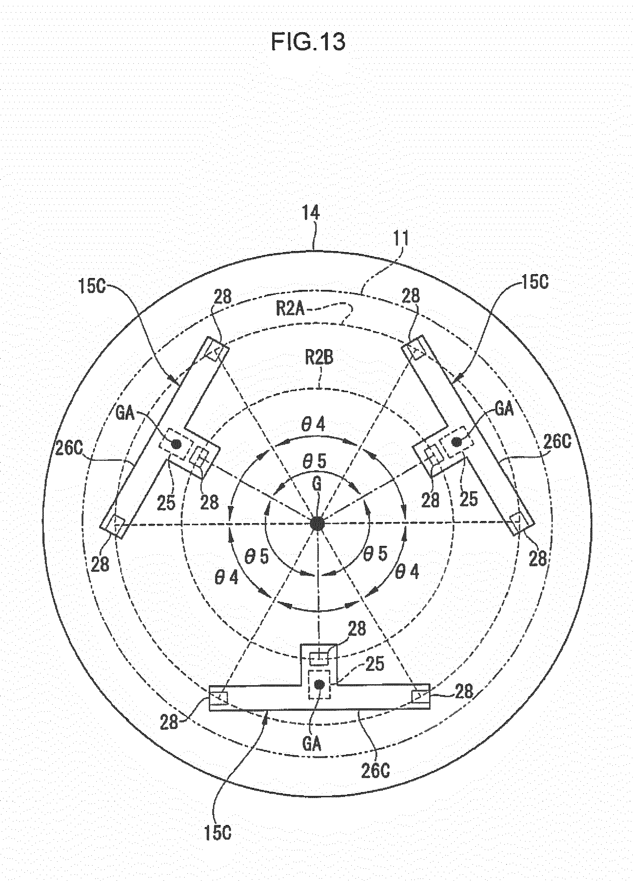

Figure 13 is an explanation view for explaining workpiece support units 15C provided in a roundness measuring device 10 according to the fourth embodiment. In the third embodiment, all of the nine workpiece seats 28 are arranged at positions on the same circumference R2, whereas in the fourth embodiment, nine workpiece seats 28 are distributed at positions on two circles whose diameters are different from one another.

Note that, the roundness measuring device 10 according to the fourth embodiment is fundamentally the same as that of the above-mentioned first embodiment with the exception that the workpiece support units 15C are provided instead of the workpiece support units 15. As such, parts or portions which are functionally or structurally the same as those of the above-mentioned first embodiment are denoted using the same reference numerals, and descriptions thereof are omitted.

As shown in Figure 13, the workpiece support units 15C has a modified arrangement of the workpiece seats 28 of the workpiece support units 15B according to the third embodiment. The workpiece support units 15C are each provided with an arm fulcrum 25, an arm 26C, unillustrated three ball fulcrums 27 (see Figure 4), and three workpiece seats 28.

The arm 26C is fundamentally the same as the arm 26B of the above-mentioned third embodiment with the exception that the arm 26C has a shape such that three workpiece seats 28 can be arranged and distributed at positions on two circles whose diameters are different from one another.

Regarding six workpiece seats 28 of the nine workpiece seats 28, the three arms 26C are each provided with two workpiece seats such that the six workpiece seats are arranged at positions on a larger diameter side same circle R2A having the center of gravity G as a circle center and are arranged around the gravity center axis GL at equal spacing θ4 (θ4 = 60 degrees). Regarding the remaining three workpiece seats 28, the three arms 26 are each provided with one workpiece seat such that the three workpiece seats are arranged at positions on a smaller diameter side same circle R2B having the center of gravity G as a circle center and are arranged around the gravity center axis GL at equal spacing θ5 (θ5 = 120 degrees). This makes it possible to uniformly support the outer peripheral portions of the bottom surface of the workpiece 11 at six points and to uniformly support the inner peripheral portions of the bottom surface of the workpiece 11 at three points. Namely, it is possible to uniformly support the workpiece 11 at nine points.

In this way, in the fourth embodiment, the workpiece seats 28 are distributed at positions on two circles R2A, R2B whose diameters are different from one another, and the workpiece seats 28 are arranged at equal spacings θ4, θ5, respectively on the two circles R2A, R2B. Such arrangement is particularly effective for supporting a large workpiece 11 which needs a large planar support without causing deflection.

Note that, in the fourth embodiment, the workpiece seats 28 are distributed at positions on the two circles R2A, R2B whose diameters are different from one another, and are arranged at equal spacings θ4, θ5, respectively on the two circles R2A, R2B. However, the workpiece seats 28 may be distributed at positions on three or more concentric circles whose diameters are different from one another, and are arranged at equal spacings, respectively on the circles.

<Fifth Embodiment>

The workpiece support unit according to the fifth embodiment does not form part of the invention but represents a further example that is useful for understanding the invention.

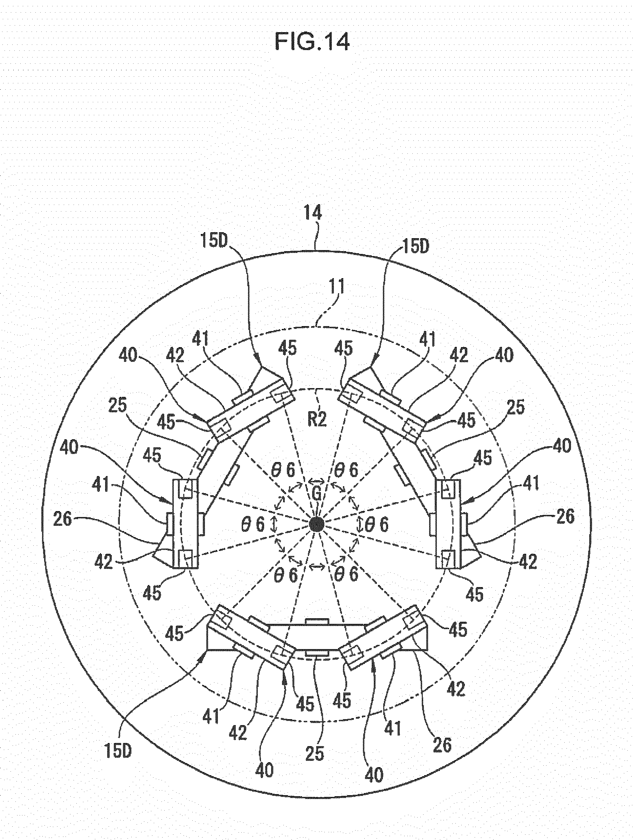

Figure 14 is an explanation view for explaining workpiece support units 15D provided in a roundness measuring device 10 according to the fifth embodiment. In the above-mentioned first embodiment, each workpiece support unit 15 supports the workpiece 11 at two points, whereas in the fifth embodiment each workpiece support unit 15D supports the workpiece 11 at four points.

Note that, the roundness measuring device 10 according to the fifth embodiment is fundamentally the same as that of the above-mentioned first embodiment with the exception that the workpiece support units 15D are provided instead of the workpiece support units 15. As such, parts or portions which are functionally or structurally the same as those of the above-mentioned first embodiment are denoted using the same reference numerals, and descriptions thereof are omitted.

The workpiece support units 15D are fundamentally the same as the arms 26 of the first embodiment with the exception that the sub-support units 40 are provided on each end portion in the arm's longitudinal direction of each arm 26.

The sub-support units 40 correspond to the first contacting parts and come into contact with the workpiece 11 at two points. The sub-support units 40 are each provided with an arm fulcrum 41, an arm 42, unillustrated two ball fulcrums 27 (see Figure 4), and two workpiece seats 45.

The arm fulcrums 41 correspond to the second fulcrums and are each provided on both end portions in the arm's longitudinal direction on the upper surface of each arm 26. The arm 42 which corresponds to the second arm of the present invention is supported swingably around a horizontal axis, and is supported at a central part of the arm 42 in the arm's longitudinal direction by each arm fulcrum 41.

The unillustrated ball fulcrums 27 (see Figure 4) are provided on both end portions in the arm's longitudinal direction on the upper surface of each arm 42. These ball fulcrums 27 are provided on both end portions in the arm's longitudinal direction on the upper surface in a state where the ball fulcrums 27 are distributed symmetrically (equally) on the left and right sides with the arm fulcrum 41 as a center. Each ball fulcrum 27 supports the workpiece seat 45 swingably in any direction. That is, the workpiece seats 45 are arranged on the upper surface of the arm 42 such that the workpiece seats 45 are distributed from the arm fulcrum 41 in different directions.

The workpiece seats 45 correspond to the second contacting parts and come into contact with a bottom surface of the workpiece 11. In the fifth embodiment, the workpiece support units 15D are each provided with two sub-support units 40, and arms 42 of the sub-support units 40 are each provided with two swingable workpiece seats 45. Therefore, the total 12 workpiece seats 45 come into contact with the bottom surface of the workpiece 11.

Then, in the fifth embodiment, the positions of the arm fulcrums 25, the lengths of the arms 26, the positions and directions of the arm fulcrums 41, the lengths of the arms 42, and the positions of the workpiece seats 45 on the arms 42, etc., are each adjusted such that the workpiece seats 45 are arranged at positions on the same circumference R2 having the center of gravity G as a circle center, and are arranged around the gravity center axis GL at equal spacing θ6 (θ6 = 30 degrees). This makes it possible to uniformly support the workpiece 11 at twelve points.

In this way, in the fifth embodiment, the workpiece 11 is uniformly supported at the twelve points and thus it is possible to make the distance between the workpiece fulcrums (workpiece seats 28) shorter than that of the first embodiment. Thus, it is possible to reduce the deflection of the workpiece 11 caused due to own weight of the workpiece 11 more effectively than the first embodiment. Further, because the workpiece support units 15D are each provided with two sub-support units 40, it is possible for the workpiece seats 45 to follow the unevenness (convexo-concave) of the bottom surface of the workpiece 11 more surely than the first embodiment.

Note that, in the fifth embodiment, a configuration in which the workpiece seats 28 (ball fulcrums 27) of the above-mentioned first embodiment are replaced with the sub-support units 40 has been described as an example. The workpiece seats 28 of the embodiments other than the above-mentioned first embodiment may be respectively replaced with the sub-support units 40. Further, as the sub-support units 40, it is possible to employ the structure similar to the workpiece support units 15B of the third embodiment or to the workpiece support units 15C of the fourth embodiment.

Further, in the fifth embodiment, the workpiece seats 45 of the sub-support units 40 may be respectively replaced with the structure similar to the sub-support units 40. In this case, it is possible to uniformly support the workpiece 11 at twenty-four points.

<Others>

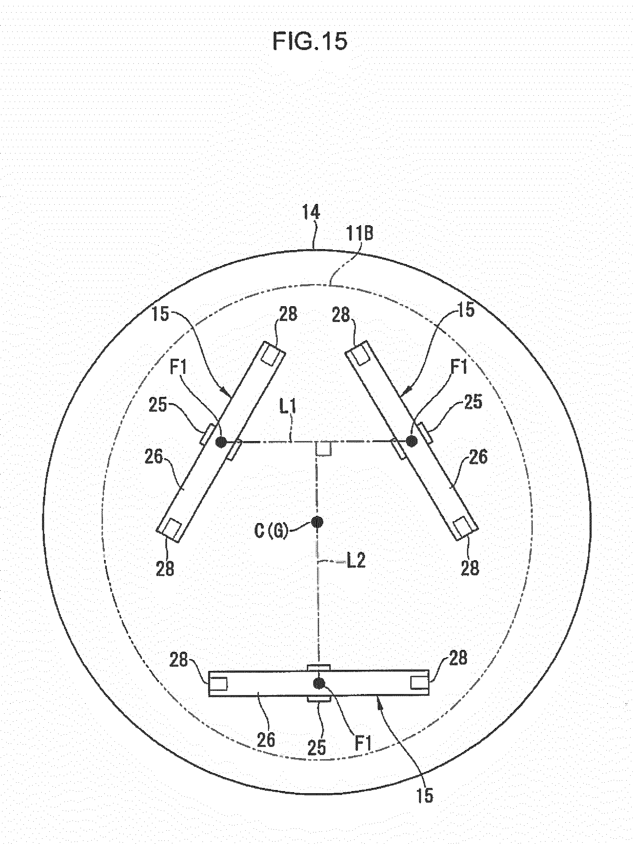

In the above-mentioned embodiments, the arm fulcrums 25 and the workpiece seats 28, 45 are arranged at positions on the same circle(s) having the center of gravity G of the workpiece 11 as a circle center, at equal spacing. However, as in Figure 15 explained below, the arm fulcrums 25 and the workpiece seats 28 need not always be arranged at positions on the same circle, at equal spacing.

Figure 15 is an explanation view for explaining another embodiment of the arrangement of the arm fulcrums 25 and the workpiece seats 28. Said embodiment does not form part of the invention but represents a further example that is useful for understanding the invention. As shown in Figure 15, in other embodiments, three arm fulcrums 25 are arranged on the upper surface of the table 14 such that the center of gravity of the three arm fulcrums 25 (workpiece support units 15) coincides with the center of gravity of the workpiece 11B. That is, the arm fulcrums 25 (workpiece support units 15) are arranged such that a first line segment L1 connects two of the three fulcrums, a second line segment L2 connects the other fulcrum and the center of gravity G of the workpiece 11, and the extended second line segment L2 perpendicularly intersects with the first line segment L1 at the midpoint of the first line segment L1.

Also in this case, the workpiece 11B is supported by the workpiece seats 28 at six points and therefore it is possible to distribute the load of the workpiece 11B applied to the workpiece seats 28 almost uniformly. Further, it is possible to bring the workpiece seats 28 into contact with the bottom surface of the workpiece 11B in a state where the workpiece seats 28 follow the unevenness (convexo-concave) of the bottom surface the workpiece 11B. As a result, nearly the same effect as each of the embodiments can be obtained.

In each of the embodiments, the workpiece 11 supporting device of the roundness measuring device 10 has been described by way of example. However, the present invention is applicable to a workpiece 11 supporting device of various shape measuring devices for measuring the shape of the workpiece 11, such as, for example, three-dimensional measuring device, surface shape measuring device, etc.

{Reference Signs List}

| | |
|---|---|
| 10 | roundness measuring device |
| 11, 11A, 11B | workpiece |
| 14 | table |
| 15, 15A-15D | workpiece support unit |
| 25 | arm fulcrum |
| 26, 26A-26C | arm |
| 28 | workpiece seat |
| 31 | guide groove |
| 40 | sub-support unit |
| 45 | workpiece seat |

**Claims**

1. A workpiece supporting device to be provided for a shape measuring device (10) which measures a shape of a workpiece (11, 11A), the workpiece supporting device comprising:

   a horizontal table (14);
   three first fulcrums (25) provided on an upper surface of the table (14);
   first arms (26A) swingably supported by the respective first fulcrums (25), each of the first arms (26A) swingably supported at a central part in a longitudinal direction of the first arm (26A) by the first fulcrum (25); and
   a plurality of first contacting parts (28) swingably provided on an upper surface of the first arm (26A) for each first fulcrum (25) and distributed from the first fulcrum (25) in different directions, the first contacting parts (28) configured to come into contact with the workpiece (11, 11A),
   **characterized in that** each of the first arms (26A) is retractable in the longitudinal direction of each first arm (26A).

2. The workpiece supporting device according to claim 1, wherein positional relation between the first fulcrums (25) satisfies a requirement that a first line segment (L1) connects two of the three first fulcrums (25), a second line segment (L2) is connectable between the other one first fulcrum (25) and a center of gravity (G) of the workpiece (11, 11A), and an extension of the second line segment (L2) perpendicularly intersects with the first line segment (L1) at a midpoint of the first line segment (L1).

3. The workpiece supporting device according to claim 1 or 2, wherein the first fulcrums (25) are provided on the upper surface of the table (14) around a reference axis (GL), which passes through a predetermined reference point on the table (14) and extends perpendicularly to the upper surface of the table (14), at equal spacing.

4. The workpiece supporting device according to any one of claims 1 to 3, wherein the first fulcrums (25) are provided on the upper surface of the table (14) on the same circle adapted to have a center of gravity (G) of the workpiece (11, 11A) as a circle center.

5. The workpiece supporting device according to any one of claims 1 to 4, comprising a guide part (31) configured to movably support the first fulcrums (25) along the upper surface of the table (14).

6. The workpiece supporting device according to any one of claims 1 to 5, wherein the first fulcrum (25) supports the first arm (26A) swingably around an axis which is parallel to a third line segment that connects the first fulcrum (25) and a predetermined reference point on the table (14).

7. The workpiece supporting device according to any one of claims 1 to 6, wherein all of the first contacting parts (28) are adapted to be arranged on the same circle having a center of gravity (G) of the workpiece (11, 11A) as a circle center.

8. The workpiece supporting device according to any one of claims 1 to 6, wherein the first contacting parts (28) are distributed on a plurality of circles having diameters different from each other and having a predetermined reference point as a circle center.

9. The workpiece supporting device according to any one of claims 1 to 8, wherein all of the first contacting parts (28) are arranged around a reference axis (GL), which passes through a predetermined reference point on the table (14) and extends perpendicularly to the upper surface of the table (14), at equal spacing.

10. The workpiece supporting device according to any one of claims 1 to 9, wherein the first contacting part (28) comprises:

    second fulcrums (41) provided on the upper surface of the first arm (26A);
    second arms (42) swingably supported by the second fulcrums (41), each of the second arms swingably supported at a central part in a longitudinal direction of the second arm (42) by the second fulcrum (41); and
    a plurality of second contacting parts (45) swingably provided on an upper surface of the second arm (42) for each second fulcrum (41) and distributed from the second fulcrum (41) in different directions, the second contacting parts (45) configured to come into contact with the workpiece (11, 11A).

**Patentansprüche**

1. Werkstück-Auflagevorrichtung, die für eine Form-Messvorrichtung (10) bestimmt ist, die eine Form eines Werkstücks (11, 11A) misst, wobei die Werkstück-Auflagevorrichtung umfasst:

   einen horizontalen Tisch (14);
   drei erste Drehpunkte (25), die sich an einer Oberseite des Tischs (14) befinden;
   erste Arme (26A), die über die jeweiligen ersten Drehpunkte (25) schwenkbar gelagert sind, wobei jeder der ersten Arme (26A) an einem Mittelteil in einer Längsrichtung des ersten Arms (26A) über den ersten Drehpunkt (25) schwenkbar gelagert ist; sowie
   eine Vielzahl erster Kontaktteile (28), die für jeden ersten Drehpunkt (25) an einer Oberseite des ersten Arms (26A) schwenkbar angeordnet sind und von dem ersten Drehpunkt (25) aus in verschiedenen Richtungen verteilt sind, wobei die ersten Kontaktteile (28) so ausgeführt sind, dass sie mit dem Werkstück (11, 11A) in Kontakt kommen,
   **dadurch gekennzeichnet, dass** jeder der ersten Arme (26A) in der Längsrichtung jedes ersten Arms (26A) eingezogen werden kann.

2. Werkstück-Auflagevorrichtung nach Anspruch 1, wobei eine Positionsbeziehung zwischen den ersten Drehpunkten (25) eine Anforderung dahingehend erfüllt, dass ein erstes Liniensegment (L1) zwei der drei ersten Drehpunkte (25) verbindet, ein zweites Liniensegment (L2) Verbindung zwischen dem anderen ersten Drehpunkt (25) und einem Schwerpunkt (G) des Werkstücks (11, 11A) herstellen kann, und eine Verlängerung des zweiten Liniensegments (L2) das erste Liniensegment (L1) an einem Mittelpunkt des ersten Liniensegments (L1) senkrecht schneidet.

3. Werkstück-Auflagevorrichtung nach Anspruch 1 oder 2, wobei die ersten Drehpunkte (25) an der Oberseite des Tischs (14) in gleichmäßigem Abstand um eine Bezugs-Achse (GL) herum angeordnet sind, die durch einen vorgegebenen Bezugs-Punkt an dem Tisch (14) verläuft und sich senkrecht zu der Oberseite des Tischs (14) erstreckt.

4. Werkstück-Auflagevorrichtung nach einem der Ansprüche 1 bis 3, wobei die ersten Drehpunkte (25) an der Oberseite des Tischs (14) auf demselben Kreis angeordnet sind, der so eingerichtet ist, dass er einen Schwerpunkt (G) des Werkstücks (11, 11A) als einen Kreismittelpunkt hat.

5. Werkstück-Auflagevorrichtung nach einem der Ansprüche 1 bis 4, die einen Führungsteil (31), der so ausgeführt ist, dass er die ersten Drehpunkte (25) an der Oberseite des Tischs (14) beweglich trägt.

6. Werkstück-Auflagevorrichtung nach einem der Ansprüche 1 bis 5, wobei der erste Drehpunkt (25) den ersten Arm (26A) schwenkbar um eine Achse lagert, die parallel zu einem dritten Liniensegment ist, das den ersten Drehpunkt (25) und einen vorgegebenen Bezugs-Punkt an dem Tisch (14) verbindet.

7. Werkstück-Auflagevorrichtung nach einem der Ansprüche 1 bis 6, wobei alle der ersten Kontaktteile (28) so eingerichtet sind, dass sie auf demselben Kreis angeordnet sind, der einen Schwerpunkt (G) des Werkstücks (11, 11A) als einen Kreismittelpunkt hat.

8. Werkstück-Auflagevorrichtung nach einem der Ansprüche 1 bis 6, wobei die ersten Kontaktteile (28) auf einer Vielzahl von Kreisen mit voneinander verschiedenen Durchmessern und mit einem vorgegebenen Bezugs-Punkt als einem Kreismittelpunkt verteilt sind.

9. Werkstück-Auflagevorrichtung nach Anspruch 1 oder 2, wobei alle der ersten Kontaktteile (28) in gleichmäßigem Abstand um eine Bezugs-Achse (GL) herum angeordnet sind, die durch einen vorgegebenen Bezugs-Punkt an dem Tisch (14) verläuft und sich senkrecht zu der Oberseite des Tischs (14) erstreckt.

10. Werkstück-Auflagevorrichtung nach einem der Ansprüche 1 bis 9, wobei der erste Kontaktteil (28) umfasst:

   zweite Drehpunkte (41), die an der Oberseite des ersten Arms (26A) angeordnet sind;
   zweite Arme (42), die über die zweiten Drehpunkte (41) schwenkbar gelagert sind, wobei jeder der zweiten Arme an einem Mittelteil in einer Längsrichtung des zweiten Arms (42) über den zweiten Drehpunkt (41) schwenkbar gelagert ist; sowie
   eine Vielzahl zweiter Kontaktteile (45), die für jeden zweiten Drehpunkt (41) an einer Oberseite des zweiten Arms (42) schwenkbar angeordnet sind und von dem zweiten Drehpunkt (41) aus in verschiedenen Richtungen verteilt sind, wobei die zweiten Kontaktteile (45) so ausgeführt sind, dass sie mit dem Werkstück (11, 11A) in Kontakt kommen.

**Revendications**

1. Dispositif de support de pièce de travail destiné à équiper un dispositif de mesure de forme (10) qui mesure la forme d'une pièce de travail (11, 11A), le dispositif de support de pièce de travail comprenant :

   une table horizontale (14) ;
   trois premiers points d'appui (25) disposés sur une surface supérieure de la table (14) ;
   des premiers bras (26A) supportés de manière pivotante par les premiers points d'appui respectifs (25), chacun des premiers bras (26A) étant supporté de manière pivotante au niveau d'une partie centrale dans une direction longitudinale du premier bras (26A) par le premier point d'appui (25) ; et
   une pluralité de premières parties de contact (28) disposées de manière pivotante sur une surface supérieure du premier bras (26A) pour chaque premier point d'appui (25) et distribuées à partir du premier point d'appui (25) dans des directions différentes, les premières parties de contact (28) étant configurées pour entrer en contact avec la pièce de travail (11, 11A),
   **caractérisé en ce que** chacun des premiers bras (26A) est rétractable dans la direction longitudinale de chaque premier bras (26A).

2. Dispositif de support de pièce de travail selon la revendication 1, dans lequel la relation de position entre les premiers points d'appui (25) satisfait à une exigence selon laquelle un premier segment de droite (L1) relie deux des trois premiers points d'appui (25), un deuxième segment de droite (L2) peut faire la liaison entre l'autre premier point d'appui (25) et un centre de gravité (G) de la pièce de travail (11, 11A), et un prolongement du deuxième segment de droite (L2) coupe à angle droit le premier segment de droite (L1) au milieu du premier segment de droite (L1).

3. Dispositif de support de pièce de travail selon la revendication 1 ou 2, dans lequel les premiers points d'appui (25) sont disposés sur la surface supérieure de la table (14) autour d'un axe de référence (GL) qui passe par un point de référence prédéterminé sur la table (14) et s'étend perpendiculairement à la surface supérieure de la table (14), à équidistance.

4. Dispositif de support de pièce de travail selon l'une quelconque des revendications 1 à 3, dans lequel les premiers points d'appui (25) sont disposés sur la surface supérieure de la table (14) sur le même cercle adapté de sorte à avoir pour centre un centre de gravité (G) de la pièce de travail (11, 11A).

5. Dispositif de support de pièce de travail selon l'une quelconque des revendications 1 à 4, comprenant une partie guide (31) configurée pour supporter de manière mobile les premiers points d'appui (25) le long de la surface supérieure de la table (14).

6. Dispositif de support de pièce de travail selon l'une quelconque des revendications 1 à 5, dans lequel le premier point d'appui (25) supporte le premier bras (26A) de manière pivotante autour d'un axe qui est parallèle à un troisième segment de droite qui relie le premier point d'appui (25) et un point de référence prédéterminé sur la table (14).

7. Dispositif de support de pièce de travail selon l'une quelconque des revendications 1 à 6, dans lequel toutes les premières parties de contact (28) sont adaptées de manière à être agencées sur le même cercle ayant pour centre un centre de gravité (G) de la pièce de travail (11, 11A).

8. Dispositif de support de pièce de travail selon l'une quelconque des revendications 1 à 6, dans lequel les premières parties de contact (28) sont distribuées sur une pluralité de cercles ayant des diamètres différents les uns des autres et ayant pour centre un point de référence prédéterminé.

9. Dispositif de support de pièce de travail selon l'une quelconque des revendications 1 à 8, dans lequel toutes les premières parties de contact (28) sont agencées autour d'un axe de référence (GL) qui passe par un point de référence prédéterminé sur la table (14) et s'étend perpendiculairement à la surface supérieure de la table (14), à équidistance.

10. Dispositif de support de pièce de travail selon l'une quelconque des revendications 1 à 9, dans lequel la première partie de contact (28) comprend :

des seconds points d'appui (41) disposés sur la surface supérieure du premier bras (26A) ;
des seconds bras (42) supportés de manière pivotante par les seconds points d'appui (41), chacun des seconds bras étant supporté de manière pivotante au niveau d'une partie centrale dans une direction longitudinale du second bras (42) par le second point d'appui (41) ; et
une pluralité de secondes parties de contact (45) disposées de manière pivotante sur une surface supérieure du second bras (42) pour chaque second point d'appui (41) et distribuées à partir du second point d'appui (41) dans des directions différentes, les secondes parties de contact (45) étant configurées pour entrer en contact avec la pièce de travail (11, 11A).

FIG.1

EP 3 441 716 B1

FIG.2

# FIG.3

FIG.4

# FIG.5

# FIG.6

FIG.7

EP 3 441 716 B1

# FIG.8

FIG.9

# FIG.10

11A

CS

35

G

(A)

11A

35

(B)

FIG.11

FIG.12

## FIG.13

FIG.14

# FIG.15

# FIG.16

(A)

100

102 102 102

101

(B)

100

104

**EP 3 441 716 B1**

**REFERENCES CITED IN THE DESCRIPTION**

**Patent documents cited in the description**

- JP 6341804 A
- JP 2000146504 A
- JP 2014181986 A
- JP 2005091051 A